# EUROPÄISCHE PATENTSCHRIFT

(11) **EP 1 521 674 B1**
(45) Veröffentlichungstag und Bekanntmachung des Hinweises auf die Patenterteilung: **02.11.2006**
(21) Anmeldenummer: 02767179.1
(22) Anmeldetag: 05.07.2002
(51) Int. Cl.: B32B 27/32, A22C 13/00

(54) **BIAXIAL VERSTRECKTE, FÜNFSCHICHTIGE SCHLAUCHFOLIE ZUR VERPACKUNG UND UMHÜLLUNG VON FLEISCH MIT ODER OHNE KNOCHEN ODER PASTÖSEN LEBENSMITTELN UND IHRE VERWENDUNG**
BIAXIAL STRETCH TUBULAR FILM WITH FIVE LAYERS FOR THE PACKAGING AND COVERING OF MEAT WITH OR WITHOUT BONES ARE PASTE-LIKE FOODSTUFFS AND USE THEREOF
FILM TUBULAIRE A CINQ COUCHES, ETIRE BIAXIALEMENT, POUR EMBALLER ET ENTOURER DE LA VIANDE AVEC OU SANS OS OU DES PRODUITS ALIMENTAIRES PATEUX ET SON UTILISATION

(43) Veröffentlichungstag der Anmeldung: 13.04.2005
(73) Patentinhaber: Naturin GmbH & Co, 69469 Weinheim (DE)
(72) Erfinder: GRUND, Hartmut, 67166 Otterstadt (DE); RAUE, Frank, 76137 Karlsruhe (DE); SCHAUER, Helmut, 68542 Hedesheim (DE)
(74) Vertreter: Klöpsch, Gerald
(86) Internationale Anmeldenummer: PCT/EP2002/007499
(87) Internationale Veröffentlichungsnummer: WO 2004/005025

(56) Entgegenhaltungen:
- DE-A- 4 339 337
- US-A- 5 314 749

## Beschreibung

Die Erfindung betrifft eine biaxial verstreckte, mindestens fünfschichtige, schrumpf- und siegelfähige Schlauchfolie sowie deren Verwendung zur Verpackung und Umhüllung von Fleisch, das Knochen aufweisen kann, sowie für pastöse Lebensmittel.

Die Verpackungshüllen für Fleisch mit Knochen (Beutel, zumeist aus einer Schlauchfolie, die an einem Ende herstellerseitig mit einer Siegelnaht in Querrichtung verschlossen wird) müssen nicht nur sauerstoff- und wasserdampfundurchlässig sein, damit das Verpackungsgut nicht verdirbt oder austrocknet, sondern müssen auch hohe mechanische Belastungen beim Einfüllen und bei den weiteren Schritten der Verpackung nach dem Verschließen des Beutels wie dem Schrumpfen der Hülle auf das Verpackungsgut durch Erwärmen und während der Lagerung und des Transports aushalten. Hierbei besteht insbesondere die Gefahr, daß spitze Knochen die Verpackungshülle durchstoßen. Neben allen anderen für eine Verpackungshülle für Fleisch wichtigen Eigenschaften müssen daher derartige Fleischverpackungen sowohl eine gute Siegelbarkeit bei absoluter Dichtigkeit der Siegelnaht auch unter Belastungen wie auch eine hohe Durchstoßfestigkeit aufweisen.

Bereits die US 6,004;599 beschreibt eine Beutelanordnung zur Verpackung von Fleisch mit Knochen, die aus schrumpffähigen und hitzesiegelbaren Folienhüllen besteht. Zur Erhöhung der Durchstoßfestigkeit werden zwei ineinanderliegende Beutel verwendet, die jeweils aus einer dreischichtigen Folie bestehen. Bei der Anwendung wird das zu verpackende Fleisch mit Knochen nacheinander in zwei Beutel verpackt, so daß zur Erhöhung der Durchstoßfestigkeit gegenüber hervorstehenden Knochen die doppelte Wandstärke eines einzelnen Beutels zur Verfügung steht. Beide Beutel sind am Boden versiegelt, wobei die Siegelnaht des Innenbeutels Unterbrechungen aufweist, damit beim abschließenden Evakuieren die Luft aus dem Innenbeutel abgezogen werden kann, bevor der gegen den Innenbeutel längere Außenbeutel verschlossen wird. Auch diese Lösung ist umständlich und kostenaufwendig.

Die CA 2,230,820 beschreibt einen durchstoßfesten Folienbeutel, der aus aufeinandergesiegelten Flachfolien hergestellt wird, zur Verpackung von knochenhaltigem Fleisch mit Bereichen, die einen siebenschichtigen Folienaufbau haben. Diese siebenschichtigen Folienbereiche weisen als äußere hitzesiegelbare Schicht ein Polyethylen auf, beispielsweise mit einem Metallocen-Katalysator hergestellt, anschließend eine Zwischenschicht aus einem Polyamid, beispielsweise einem PA6/66, das mittels einer Haftschicht auf Basis Polyolefin aufgebracht ist, wobei sich an die Zwischenschicht eine Kernschicht anschließt, die als Sauerstoffbarriere dient und beispielsweise aus EVOH (Ethylen-Vinyl-Alkohol) besteht, anschließend eine weitere Zwischenschicht, wie zuvor aus Polyamid und als innere heißsiegelbare Schicht Polyethylen, das beispielsweise mit einem Metallocen-Katalysator hergestellt ist, die über eine Haftschicht auf Basis Polyolefin mit der Polyamidschicht verbunden ist. Bei diesem Aufbau dienen die innen- und außenliegende Schicht zur Heißsiegelung und auch als Feuchtigkeitsschutz für die Kernschicht und verleihen der Gesamtstruktur Festigkeit. Auch die Zwischenschichten aus Polyamid, die die Kernschicht einschließen, verleihen dem Film Festigkeit, nämlich gegen Durchstoß, sowie auch Wärmebeständigkeit. Der Folienbeutel, der zur Verpackung von Fleisch mit Knochen verwendbar ist, besteht aus zwei übereinandergelegten Folienabschnitten aus siebenschichtiger Folie, die an einer ihrer Berührungskanten ineinander übergehen können und an zwei weiteren Berührungskanten durch Heißsiegeln miteinander verbunden wurden. Die nicht miteinander verbundenen Kanten dieser übereinanderliegenden siebenschichtigen Folienabschnitte bilden eine Öffnung, die durch angefügte dünnere dreischichtige Folienabschnitte verlängert werden. Diese dreischichtigen Folienabschnitte werden durch Heißsiegeln miteinander zu einem beidseitig offenendigen Schlauch bzw. mit der Öffnung der aneinandergesiegelten siebenschichtigen Folienabschnitte zu einem durchgehenden Folienbeutel verbunden.

Nach dem Einfüllen eines zu verpackenden Gutes in den Beutel wird dieser durch Aufeinandersiegeln der dünnen, nämlich dreischichtigen Folienabschnitte verschlossen, wobei die siebenschichtigen Folienabschnitte den durchstoßfesten Bereich des Beutels bilden sollen. An diesem Stand der Technik ist nicht nur das aufwendige Herstellungsverfahren des versiegelungsfähigen Beutels durch Aufeinandersiegeln mehrerer Folienabschnitte mit unterschiedlichem Aufbau und unterschiedlicher Dicke nachteilig, sondern überdies wird nicht die Kombination eines durchstoßfesten Folienschlauches mit hoher Siegelnahtfestigkeit erzielt. Denn das Verschließen dieses Folienbeutels erfolgt im Bereich der dreischichtigen und dünnwandigen Folienabschnitte, die angrenzend an den durchstoßfesten siebenschichtigen Abschnitt des Folienbeutels, der das Fleisch mit Knochen aufnehmen soll, gebildet werden. Dieser Folienbeutel sieht vielmehr eine Trennung der Eigenschaften von Durchstoßfestigkeit, durch die siebenschichtige Folie bereitgestellt, und der Versiegelung des Beutels, nämlich an den angefügten dreischichtigen dünneren Folienabschnitten, vor.

Die EP 0 987 103 A1 offenbart Flachfolien mit symmetrischem Aufbau aus insgesamt fünf Schichten, so daß eine Kernschicht beidseitig von einer angrenzenden Schicht umschlossen wird, auf der wiederum als Außenschicht identische Polymere aufgebracht sind. Als Kernschicht werden Polyamide und Polyamidmischungen, beispielsweise Polyamide, basierend auf Hexamethylendiamin, Meta-Xylylendiamin ,Sebazinsäure und Adipinsäure oder Mischungen mit Ethylen-Vinyl-Alkohol-Copolymer verwendet. Die diese Kernschicht umschließenden Schichten bestehen aus einem Anhydrid gepfropften Polyolefin, nämlich linearem Polyethylen niedriger Dichte auf Butenbasis.

Die DE 43 39 337 A1 offenbart eine fünfschichtige, biaxial verstreckte Schlauchfolie zur Verpackung und Umhüllung von pastösen Lebensmitteln, wie beispielsweise Wurst. Bei dieser Schlauchfolie wird eine Kernschicht aus Polyolefin beidseitig von Zwischenschichten aus dem gleichen Material umgeben, auf denen wiederum beidseitig eine innere bzw. äußere Schicht aus dem gleichen Polyamidmaterial aufgebracht ist. Innen- und Außenschicht bestehen aus wenigstens einem aliphatischen Polyamid und/oder wenigstens einem aliphatischen Copolyamid sowie wenigstens einem teilaromatischen Polyamid und/oder wenigstens einem teilaromatischen Copolyamid, wobei der Anteil des teilaromatischen Polyamids und/oder Copolyamids 5 bis 60 Gew.-%, bezogen auf das Gesamtgewicht der Polymermischung aus teilaromatischen und aliphatischen Polyamiden und Copolyamiden beträgt. Einer solchen Schlauchfolie, die durch Coextrusion hergestellt wird, wird durch biaxiales Verstrecken und Thermofixieren ein kontrolliertes Schrumpfvermögen verliehen. Dieser Aufbau eignet sich insbesondere für die Umhüllung von Wurst, da die innere Polyamidschicht eine gute Bräthaftung aufweist, die Kernschicht aus Polyolefin eine Wasserdampfbarriere bildet und die außenliegende Polyamidschicht sowohl strukturelle Festigkeit vermittelt, als auch eine Sauerstoffbarriere darstellt, die von dem eingefüllten Gut durch die Kernschicht feuchtigkeitsdicht getrennt ist. Der besondere Vorteil der Polyamid-Innenschicht liegt zum einen in der guten Bräthaftung, zum anderen darin, daß bei der thermischen Verschmelzung die Innenschicht eine Verbindung mit hoher Siegelnahtfestigkeit ergibt. Zur Siegelung einer solchen Folie ist der Siegelbalken auf eine Temperatur von mindestens 140°C als sogenannte Siegeltemperatur einzustellen.

Die bisher beschriebenen Schlauchfolien haben insofern nachteilige anwendungstechnische Eigenschaften, als sie keine ausreichende Festigkeit aufweisen, um nicht durch Knochen, die mit Fleisch in ihnen enthalten sind, durchstoßen zu werden. Bei der Verpackung von Fleisch mit Knochen besteht die Gefahr, daß der vorstehende Knochen während oder nach dem Aufschrumpfen der Folie auf das Verpackungsgut, beispielsweise durch Anlegen eines Vakuums an die Schlauchfolie, diese durchstoßen. Bei aus derartigen Schlauchfolien hergestellten Beuteln kommt es außerdem entscheidend auf die Festigkeit der Siegelnaht an. Wenn zum Beispiel aus einem Füllrohr ein Stück Schinken oder Fleisch in einen am unteren Ende durch eine Heißsiegelnaht verschlossenen Beutel aus einer Kunststoffolie fällt, treten in Abhängigkeit vom Gewicht erhebliche Belastungen durch den Fall des Verpackungsguts in den Beutel auf, die dazu führen können, daß die Heißsiegelnaht reißt und der Beutel sich daher am unteren Ende wieder vollständig öffnet. Auch beim späteren Valcuumieren und Schrumpfen der Beutel wird die Heißsiegelnaht extremen Belastungen ausgesetzt. Auch der Transport und die Lagerung der gefüllten Beutel stellt hohe Anforderungen an die Durchstoßfestigkeit der Folie und die Siegelnahtfestigkeit. Generell ist bei der Anwendung zu berücksichtigen, daß derartige Schlauchfolien auf einfache Weise durch Heißsiegeln verschließbar sein müssen, so daß auch dann eine hohe Siegelnahtfestigkeit erreicht wird, wenn durch Reste des Verpackungsgutes wie beispielsweise Fleischfasern, Fett, Wasser, Blut oder Hautreste gesiegelt werden muß.

Eine erhöhte Durchstoßfestigkeit von Folienhüllen zur Verpackung von Fleisch mit Knochen ist in den folgenden Schriften offenbart:

Aus der AU 199938013 A1 ist ein Beutel zur Verpackung von Fleisch mit Knochen bekannt, der eine verbesserte Durchstoßfestigkeit aufweisen soll. Dieser Beutel besteht aus einer dreischichtigen Folie, deren Oberfläche teilweise von einem zusätzlich aufgebrachten Folienstück abgedeckt ist. Das Folienmaterial des eigentlichen Beutels hat einen dreischichtigen Aufbau aus einer innenliegenden heißsiegelfähigen Schicht, einer außenliegenden Abnutzungsschicht sowie einer Kernschicht, die als Sperrschicht dient. Die Sperrschicht verhindert den Durchtritt von Sauerstoff und ist beispielsweise aus EVOH oder Vinylidenchlorid-Copolymeren (VDC) sowie VDC-Vinylchlorid oder aus VDC-Methylacrylat oder einer Mischung dieser hergestellt. Die siegelfähige Innenschicht besteht aus einer Mischung aus einem Copolymer von Ethylen mit C₃-C₁₀ Alphaolefinen als erste Komponente mit einem Schmelzpunkt von 55 bis 90°C, wie beispielsweise Polyethylen, das unter Verwendung von Metallocen-Katalysatoren hergestellt wurde. Als weitere Bestandteile der Innenschicht sind noch Ethylen-Alphaolefinpolymer mit einem Schmelzpunkt von 90 bis 100°C, wie beispielsweise ein weiteres mit Metallocen-Katalysator hergestelltes Polyethylen enthalten, sowie ein weiteres thermoplastisches Copolymer von Ethylen und wenigstens einem Alphaolefin mit einem Schmelzpunkt von 115 bis 130°C. Als weiterer möglicher Bestandteil der Innenschicht werden weitere Polymere angegeben, insbesondere Ethylen-Vinylacetatcopolymer (EVA). Die Abnutzungsschicht besteht auch aus einer Mischung nicht funktionalisierter Polyolefme, wie beispielsweise Polyethylen niedriger Dichte in Mischung mit EVA. Der bereichsweise außen aufgebrachte Folienabschnitt, der die Durchstoßfestigkeit der Hülle bereichsweise erhöht, besteht im wesentlichen aus einem niedrigschmelzenden Polyolefin, beispielsweise Polyethylen, einem Polyethylen niedriger Dichte, welches mit einem Metallocen-Katalysator hergestellt wurde und einem weiteren Polyethylen niedriger Dichte.

In der Schlauchfolie gemäß AU 199938013 A1 ist nachteilig, daß ein zu verpackendes Fleischstück mit Knochen so zu orientieren ist, daß die Knochen in Richtung des bereichsweise aufgebrachten zusätzlichen Folienabschnitts weisen, um nicht den nicht verstärkten Bereich der Schlauchfolie zu durchstoßen. Weiterhin ist die Siegelfähigkeit in den Bereichen beeinträchtigt, wo der zusätzlich aufgebrachte Folienabschnitt die Dicke der übrigen Schlauchfolie vergrößert, da in diesem Bereich der Wärmedurchgang durch das zusätzlich aufgebrachte Folienstück verändert wird.

In der nicht vorveröffentlichten Anmeldung PCT/EPO1/01066 wird eine mehrschichtige, bevorzugt fünfschichtige, biaxial schrumpffähig verstreckte, siegelfähige Schlauchfolie zur Verpackung und Umhüllung von Fleisch, Fleisch mit Knochen und pastösen Lebensmitteln beschrieben, welche eine erhöhte Siegelnahtfestigkeit bereits bei niedrigeren Siegeltemperaturen sowie eine hohe Durchstoßfestigkeit aufweist. Diese Schlauchfolie besitzt eine Innenschicht aus wenigstens einem heißsiegelfähigen Copolyamid und wenigstens einem amorphen Polyamid und/oder wenigstens einem Homopolyamid und/oder wenigstens einem modifizierten Polyolefin, eine mittlere Polyolefinschicht sowie eine äußere Schicht aus wenigstens einem Homopolyamid und/oder wenigstens einem Copolyamid und/oder wenigstens einem Copolymeren von Ethylenvinylalkohol und/oder einem modifizierten Polyolefin. Zwischen Innenschicht und Mittelschicht sowie Mittelschicht und Außenschicht befinden sich zwei Zwischenschichten.

Jedoch erweist sich auch diese siegelfähige Schlauchfolie noch als verbesserungsbedürftig. Es zeigt sich nämlich, daß die Heißsiegelung insbesondere bei niedrigen Temperaturen nicht funktioniert, d. h. keine dichte und mechanisch belastbare Siegelnaht erreicht wird, wenn die Innenschicht an der Stelle, an der zwecks Versiegelung erhitzt werden muß, durch anhaftendes Blut, Fleisch-, Haut- und/oder Knochenreste verunreinigt ist.

Es ist daher die Aufgabe der vorliegenden Erfindung, eine biaxial verstreckte, schrumpffähige und siegelfähige Schlauchfolie zur Verpackung von Fleisch mit Knochen bereitzustellen, die neben der, geringen Durchlässigkeit für Wasserdampf und Sauerstoff eine hohe Durchstoßfestigkeit bei möglichst geringer Wandstärke und zusätzlich eine gute Siegelbarkeit aufweist. Eine gute Siegelbarkeit zeichnet sich dadurch aus, daß bei möglichst niedrigen Siegeltemperaturen eine hohe Siegelnahtfestigkeit auch beim Siegeln durch Verunreinigungen erzielt wird. Weiterhin soll eine Schlauchfolie bereitgestellt werden, die sich durch eine gute Bedruckbarkeit der äußeren Oberfläche, eine gute Extrudierfähigkeit und eine leichte Öffnungsfähigkeit eines zusammengelegten Folienschlauches auszeichnet.

Auch wenn die Siegelfähigkeit von Polyolefinen bereits seit längerer Zeit bekannt ist, war es offenbar für Fleischverpackungen mit Knochen als unbedingt notwendig angesehen worden, die eigentliche Verpackungshüllen durch besondere Einrichtungen wie Verstärkungsfolien oder Doppelhüllen so auszugestalten, daß sie die notwendige Durchstoßfestigkeit gegenüber herausragenden Knochen gewährleisten bzw. sicherstellen. Bisher war noch nie in Betracht gezogen worden, für Fleischverpackungen mit Knochen mit "normalen" Verpackungshüllen, selbst wenn diese mehrschichtig sind, auszukommen, ganz zu schweigen vom Problem der Dichtigkeit der Siegelnaht bei Verunreinigungen. Mit der Schlauchfolie gemäß der Erfindung ist es möglich, ohne aufwendige zusätzliche Verstärkungselemente eine vergleichsweise dünnen Folie mit der hohen Dichtigkeit der Siegelnaht zu vereinigen.

In der US-A-5 314 749 wird eine fünfschichtige, biaxial verstreckte, schrumpffähige Schlauchfolie beschrieben, die eine Mittel- oder Kernschicht aus einem Polyethylen hoher Dichte, zwei Zwischenschichten aus einem Polymerklebstoff basierend auf Polyethylen niedriger Dichte sowie aus zwei Außenschichten aus einem Gemisch von Polyethylen niedriger und hoher Dichte mit einem Ethylenvinylalkohol-Copolymeren aufweist, d. h. die Schlauchfolie besteht aus fünf Schichten, die sämtlich auf Polyolefinen basieren. An keiner Stelle der Entgegenhaltung ist davon die Rede, daß mit einer solchen Schlauchfolie eine hohe Durchstoßfestigkeit bei möglichst geringer Wandstärke und zusätzlich guter Siegelbarkeit mit hoher Siegelnahtfestigkeit auch bei niedrigen Siegeltemperaturen und durch Verunreinigungen erreicht wird.

Erfindungsgemäß wird diese Aufgabe durch eine mindestens fünfschichtige, biaxial verstreckte, schrumpffähige und siegelfähige Folie gelöst, deren Innenschicht aus Polyolefin und/oder modifiziertem Polyolefin besteht. Bei den Polyolefinen handelt es sich um Homopolymere von Ethylen oder Propylen und/oder Copolymere linearer Alphaolefine mit 2 bis 8 C-Atomen. Die modifizierten Polyolefine sind Copolymerisate von Ethylen oder Propylen und gegebenenfalls weiteren linearen Alpha-Olefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester, und/oder Pfropfcopolymerisate von Alpha-Beta-ungesättigten Dicarbonsäuren, bevorzugt Maleinsäure, Fumarsäure, Itaconsäure und deren Säureanhydride, Säureester, Säureamide oder Säureimide, auf Polyolefine oder Polyolefin-Copolymere. Diese Polyolefine und/oder modifizierten Polyolefine zeichnen sich durch Schmelztemperaturen von ca. 70 bis 130°C, einen Schmelzindex von ca. 0,2-15 g/10 min. (ISO 1133) und eine Dichte von ca. 0,86 bis 0,98 g/cm³ (ISO 1'183) aus. Vorzugsweise besteht die Innenschicht aus einem mit Metallocen-Katalysator hergestellten Polyethylen. Die Kernschicht besteht aus Polyethylen oder Polypropylen und/oder Copolymeren von linearen Alphaolefinen mit 2 bis 8 C-Atomen, vorzugsweise aus linearem Polyethylen niedriger Dichte, Polyethylen hoher Dichte, Polypropylen-Homopolymerisat, Polypropylen-Block- und Polypropylen-Random-Copolymerisat. Die Innenschicht hat eine Wandstärke zwischen 5 und 20 µm, die Kernschicht zwischen 5 und 30 µm. Die Außenschicht besteht aus wenigstens einem Polyamid, bevorzugt einem aliphatischen Polyamid. Geeignete Homo- und Copolyamide sind bekannt und können aus entsprechenden Monomeren wie z.B. Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin hergestellt werden. Die Außenschicht hat eine Wandstärke zwischen 10 und 55 µm.

Zwischen der Innenschicht und der Kernschicht einerseits, sowie zwischen der Kernschicht und der äußeren Schicht andererseits ist jeweils eine weitere Schicht angeordnet, die aus Polyolefin und/oder modifiziertem Polyolefin besteht. Beim dem Polyolefin der jeweiligen Zwischenschicht handelt es sich um Homopolymere von Ethylen oder Propylen und/oder Copolymere von linearen Alphaolefinen mit 2 bis 8 C-Atomen, z.B. lineares Polyethylen niedriger Dichte, Polyethylen hoher Dichte, Polypropylen-Homopolymerisat, Polypropyylen-Block- und Polypropylen-Random-Copoymerisat. Die modifizierten Polyolefine sind Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen. Weiterhin können die modifizierten Polyolefine modifizierte Homo- oder Copolymere des Ethylens und/oder Propylens und gegebenenfalls weiterer linearer Alphaolefine mit 3 bis 8 C-Atomen sein, die Monomere aus der Gruppe der Alpha-Beta-ungesättigten Dicarbonsäuren, bevorzugt Maleinsäure, Fumarsäure, Itaconsäure oder deren Säureanhydride, Säureester, Säureamide oder Säureimide aufgepfropft enthalten. Die Zwischenschichten haben eine Wandstärke zwischen 3 und 25 µm.

Vorzugsweise besteht die Innenschicht aus LDPE mit einem hohen Anteil linearer Strukturen. Dies sind beispielsweise mit einem Metallocen-Katalysator hergestellte Polyethylene niedriger Dichte. Diese LDPE werden auch als Metallocen-LLDPE oder mLLDPE bezeichnet.

Die Schlauchfolien können zusätzlich Hilfsstoffe wie beispielsweise Antibloclcmittel, Stabilisatoren, Antistatika oder Gleitmittel enthalten. Solche Hilfsstoffe werden gewöhnlich in Mengen von 0,01 bis 5 Gew.-% zugesetzt. Überdies läßt sich die Folie durch Zugabe von Pigmenten oder Pigmentmischungen einfärben.

Die erfindungsgemäßen Schlauchfolien werden durch Coextrusion hergestellt, wobei das Material einer jeden Schicht in einem Extruder plastifiziert und homogenisiert wird, so daß bei unterschiedlichen Schichten insgesamt fünf Extruder erforderlich sind. Das Primärrohr wird von einem Fünfschichtextrusionskopf gebildet, dem fünf Schmelzströme einzeln zugeführt werden, nämlich entsprechend den gewünschten Verhältnissen der Schichtdicken. Das Primärrohr wird anschließend biaxial verstreckt und gegebenenfalls thermofixiert. Die Thermofixierung ist eine Behandlung im Anschluß an die Verstreckung, wodurch die beim Verstrecken erzielte Molekularorientierung stabilisiert wird.

Die erfindungsgemäßen Schlauchfolien weisen Gesamtwandstärken im Bereich von 30 bis 100 µm, vorzugsweise 40 bis 90 µm auf.

Die Erfindung wird nun anhand von Beispielen erläutert:

Die mechanischen und anwendungstechnischen Eigenschaften der erfindungsgemäßen Schlauchfolien wurden hinsichtlich der Siegelnahtfestigkeiten und der Schädigungsarbeit im Durchstoßversuch bestimmt. Die relative Schädigungsarbeit ist der Quotient der Schädigungsarbeit durch die Wandstärke.

Für die Bestimmung der Siegelnahtfestigkeiten wurden die jeweiligen Schlauchfolien quer zur Laufrichtung innenseitig mit einem Laborschweißgerät SGPE 20 der Firma W. Kopp Verpackungsmaschinen verschweißt. Dabei betrug die Temperatur des Siegelbalkens 100 bis 140°C, die Dauer der Siegelung 1 s. Aus den verschweißten Schlauchfolien wurden 25 mm breite Streifenproben entnommen, so daß'die Schweißnaht quer zur Längsrichtung des Streifens lag. Diese Streifenproben wurden auf einer Zugprüfmaschine der Firma Instron mit einer Abzugsgeschwindigkeit von 500 mm/min bis zum Bruch der Schweißnaht auseinandergezogen. Die dabei erreichte Maximalkraft wird als Siegelnahtfestigkeit bezeichnet.

Um den Einfluß von Verunreinigungen auf der Innenseite der Schlauchfolie auf die Siegelnahtfestigkeit zu bewerten, wurde frisches Rindfleisch in Scheiben geschnitten, in die Schlauchfolie eingelegt und manuell für einige Sekunden gegen beide gegenüberliegenden Innenseiten der Schlauchfolie gepreßt. Dabei wurde bei jedem Versuch eine neue, unmittelbar vor dem Einlegen in die Schlauchfolie geschnittene Scheibe Rindfleisch verwendet. Das Fleischstück wurde anschließend entnommen und die Heißsiegelung durchgeführt.

Die Bestimmung der Schädigungsarbeit erfolgte in Anlehnung an DIN 53 373, wobei jedoch abweichend als Stoßkörper ein gehärteter Zylinderstift Form A mit 3 mm Durchmesser entsprechend DIN EN 28 734 eingesetzt wurde und die Prüfgeschwindigkeit 500 mm/min betrug.

### Beispiel 1:

Eine erfindungsgemäße fünfschichtige Schlauchfolie wurde durch Plastifizieren und Homogenisieren der einzelnen Polymeren der unterschiedlichen Schichten in fünf Extrudern hergestellt. Dabei wurden die fünf Schmelzeströme entsprechend den gewünschten Einzelwandstärkenverhältnissen in einem Fünfschichtextrusionskopf zusammengeführt und zu einem Primärrohr ausgeformt. Dieses Primärrohr hatte einen Durchmesser von 66 mm und eine mittlere Gesamtwandstärke von 0,62 mm. Dieses Primärrohr wurde anschließend biaxial verstreckt und thermofixiert. Zur Verstreckung wurde das Primärrohr per Infrarotstrahlung auf 111°C aufgeheizt und mit einem Flächenreckverhältnis von 9,7 verstreckt. Der biaxial verstreckte Schlauch wurde thermofixiert, flachgelegt und aufgewickelt, die mittlere Gesamtwandstärke dieses Schlauches betrug 70 µm, die Liegebreite 350 mm.

Die Schichten des so hergestellten fünfschichtigen Folienschlauches weisen die folgenden Polymeren mit den angegebenen Einzelwandstärken auf:

| | |
|---|---|
| 1. Außenschicht: | Polyamid 6/66, Ultramid C 35 der Fa. BASF AG, 40 µm |
| 2. Zwischenschicht: | Modifiziertes Polyethylen, Admer NF 478 E der Firma Mitsui Chemicals Inc., 6 µm |
| 3. Kernschicht: | Polyethylen (LLDPE), Dowlex 2049E der Firma DOW Chemical Company, 12 µm |
| 4. Zwischenschicht: | Modifiziertes Polyethylen, Surlyn 1652 der Firma DuPont de Nemours GmbH, 6 µm |
| 5. Innenschicht: | Polyethylen (mLLDPE), Luflexen 18PFFX der Firma Basell, 6µm |

Luflexen 18PFFX hat folgende Eigenschaften:
Dichte 0,921 g/cm³
Schmelzindex 1,0 g/10 min
Schmelzpunkt 118°C

Die ermittelten Siegelnahtfestigkeiten betrugen:

| **Siegeltemperatur (°C)** | **Siegelnahtfestigkeit Ohne Verunreinigung (N/25 mm)** | **Siegelnahtfestigkeit mit Verunreinigung (N/25 mm)** |
|---|---|---|
| 140 | 109 | 54 |
| 120 | 95 | 49 |
| 100 | 90 | 8 |

Die Schädigungsarbeit betrug 840 mJ, die relative Schädigungsarbeit 11,0 J/mm.

### Beispiel 2:

Ein fünfschichtiger Folienschlauch wurde durch Plastifizieren und Homogenisieren der einzelnen Polymeren für die unterschiedlichen Schichten in fünf Extrudern hergestellt. Die fünf Schmelzeströme wurden entsprechend den gewünschten Einzelwandstärkenverhältnissen in einem Fünfschichtextrusionskopf zusammengeführt und zu einem Primärrohr ausgeformt, biaxial verstreckt und thermofixiert. Das zunächst hergestellte Primärrohr hatte einen Durchmesser von 66 mm und eine mittlere Gesamtwandstärke von 0,63 mm. Es wurde mit Infrarotstrahlung auf 113°C aufgeheizt und mit einem Flächenreckverhältnis von 9,6 verstreckt. Der biaxial verstreckte Schlauch wurde thermofixiert, flachgelegt und aufgewickelt. Die mittlere Gesamtwandstärke des Schlauches betrug 70 µm, die Liegebreite 352 mm.

Die Schichten des fertigen Schlauches bestehen aus den folgenden Polymeren mit den angegebenen Einzelwandstärken:

| | |
|---|---|
| 1. Außenschicht: | Polyamid 6, Durethan B40F der Bayer AG, 30 µm |
| 2. Zwischenschicht: | Modifiziertes Polyethylen, Surlyn 1652 der Firma DuPont de Nemours GmbH, 7µm |
| 3. Kernschicht: | Polyethylen (LDPE), Lupolen 1804 H der Firma Basell, 15µm |
| 4. Zwischenschicht: | Modifiziertes Polyethylen (EAA), Primarcor 1320 der Firma Dow Chemical, 7 µm |
| 5. Innenschicht: | Modifiziertes Polyethylen, Surlyn 1705 der Firma DuPont de Nemours GmbH, 11 µm |

Surlyn 1705 hat folgende Eigenschaften:
Dichte 0,95 g/cm³
Schmelzindex 5,5 g/10 min
Schmelzpunkt 87°C ,

Folgende Siegelnahtfestigkeiten wurden ermittelt: ,

| **Siegeltemperatur (°C)** | **Siegelnahtfestigkeit Ohne Verunreinigung (N/25mm)** | **Siegelnahtfestigkeit mit Verunreinigung (N/25 mm)** |
|---|---|---|
| 140 | 56 | 27 |
| 120 | 56 | 20 |
| 100 | 46 | 11 |

Die Schädigungsarbeit betrug 720 mJ, die relative Schädigungsarbeit 10,3 J/mm.

### Vergleichsbeispiel 1:

Diese fünfschichtige Schlauchfolie wurde entsprechend Beispiel 2 hergestellt, wobei die Außenschicht, Kernschicht und Zwischenschichten identisch sind, die Innenschicht jedoch einen großen Anteil Polyamid enthielt.

Die Schichten des fertigen Schlauches weisen die folgenden Polymeren mit den angegebenen Einzelwandstärken auf:

| | |
|---|---|
| 1. Außenschicht: | Polyamid 6, Durethan B40F der Bayer AG, 30 µm |
| 2. Zwischenschicht: | Modifiziertes Polyethylen, Surlyn 1652 der Firma DuPont de Nemours GmbH, 7 µm |
| 3. Kernschicht: | Polyethylen (LDPE), Lupolen 1804 H der Firma Basell, 15µm |
| 4. Zwischenschicht: | Modifiziertes Polyethylen (EAA), Primarcor 1320 der Firma Dow Chemical, 7 µm |
| 5. Innenschicht: | Mischung aus 90 % Polyamid 6/12, Grilon CF6S der Firma EMS-Chemie mit 10 % Ionomerharz, Surlyn 1652 der Firma DuPont de Nemours GmbH, 11 µm |

Die ermittelten Siegelnahtfestigkeiten betrugen:

| **Siegeltemperatur (°C)** | **Siegelnahtfestigkeit Ohne Verunreinigung (N/25 mm)** | **Siegelnahtfestigkeit mit Verunreinigung (N/25 mm)** |
|---|---|---|
| 140 | 100 | 3 |
| 120 | 92 | 2 |
| 100 | 0 | 0 |

Die Schädigungsarbeit betrug 630 mJ, die relative Schädigungsarbeit 9,0 J/mm.

### Vergleichsbeispiel2:

Handelsübliche Boneguard Beutel, Cryovac TBG der Firma Sealed Air Corporation, bilden ein Beispiel für Beutel zum Verpacken von Fleisch mit Knochen gemäß dem Stand der Technik. Diese Beutel sind zur Verstärkung auf beiden Außenseiten mit einer Verstärkungsfolie versehen, die eine Wandstärke von 130 µm aufweist und aufgeklebt ist. Das Beutelmaterial selbst weist eine Wandstärke von nur 60 µm auf, so daß in dem Bereich, in dem die Verstärkungsfolien aufgeklebt sind, eine Gesamtstärke von 190 µm gebildet wird. In diesem Bereich wurde der Durchstoßversuch zur Bestimmung der Schädigungsarbeit vorgenommen.

Die Siegelnaht wurde in dem Bereich gesetzt, wo sich keine zusätzliche Verstärkungsfolie auf dem Beutel befindet, und folgende Werte wurden ermittelt:

| **Siegeltemperatur (°C)** | **Siegelnahtfestigkeit Ohne Verunreinigung (N/25 mm)** | **Siegelnahtfestigkeit mit Verunreinigung (N/25 mm)** |
|---|---|---|
| 140 | 36 | 16 |
| 120 | 35 | 9 |
| 100 | 20 | 0 |

Die Schädigungsarbeit betrug 710 mJ, die relative Schädigungsarbeit 3,7 J/mm.

Die erfindungsgemäßen Schlauchfolien gemäß Beispiel 1 bzw. Beispiel 2 ergeben bereits bei einer Siegeltemperatur von nur 100°C ohne Verunreinigungen hohe Siegelnahtfestigkeiten von 90 bzw. 46 N/25 mm, während sich die Folie aus Vergleichsbeispiel 1 nicht bei dieser Temperatur versiegeln ließ und die Folie gemäß Vergleichsbeispiel 2 nur eine Siegelnahtfestigkeit von 20 N/25 mm erreichte. Bei der Siegelung durch Verunreinigungen hindurch bei 100°C erreichten nur die erfindungsgemäßen Schlauchfolien für die praktische Anwendung akzeptable Siegelnahtfestigkeiten von 8 bzw. 11 N/25 mm, während sich die Schlauchfolie beider Vergleichsversuche bei dieser Temperatur nicht mehr verschweißen ließen.

Zusammenfassend zeigen die Beispiele, daß nur die erfindungsgemäßen Schlauchfolien gleichzeitig eine gute Durchstoßfestigkeit und eine gute Siegel- bzw. Schweißbarkeit ohne und auch mit Verunreinigungen in sich vereinen, was sich in einer relativen Schädigungsarbeit von mehr als 10 J/mm und einer hohen Siegelnahtfestigkeit schon bei Siegeltemperaturen von 100 und 120°C zeigt.

## Patentansprüche

1. Mindestens fünfschichtige, biaxial verstreckte, schrumpffähige und siegelfähige Schlauchfolie zur Verpackung und Umhüllung von Fleisch, Fleisch mit Knochen oder pastösen Lebensmitteln, **dadurch gekennzeichnet, daß** sie aus einer Innenschicht aus wenigstens einem heißsiegelfähigen Polyolefin und/oder modifiziertem Polyolefin, einer Kernschicht aus Polyolefin und einer Außenschicht aus wenigstens einem Polyamid sowie zwei Zwischenschichten, die jeweils zwischen Innen- und Kernschicht sowie zwischen Kem- und Außenschicht angeordnet sind, besteht.

2. Schlauchfolie nach Anspruch 1, **dadurch gekennzeichnet, daß** die Innenschicht aus Homopolymeren von Ethylen oder Propylen und/oder Copolymeren linearer Alphaolefine mit 2 bis 8 C-Atomen besteht.'

3. Schlauchfolie nach Anspruch 2, **dadurch gekennzeichnet, daß** die Polyolefine der Innenschicht vorzugsweise aus linearem Polyethylen niedriger Dichte, Polyethylen hoher Dichte, Polypropylen-Homopolymerisaten, Polypropylen-Block- und Polypropylen-Random-Copolymerisaten bestehen.

4. Schlauchfolie nach Anspruch 3, **dadurch gekennzeichnet, daß** die Innenschicht aus wenigstens einem Polyethylen besteht, welches unter Verwendung eines Metallocen-Katalysators hergestellt wurde.

5. Schlauchfolie nach Anspruch 1, **dadurch gekennzeichnet, daß** die Innenschicht modifizierte Polyolefine enthält, die
a) Copolymerisate von Ethylen oder Propylen und gegebenenfalls weiteren linearen Alpha-Olefinen mit 3 bis 8 C-Atomen
mit
Alpha-Beta-ungesättigten Carbonsäuren, bevorzugt Acrylsäure, Methacrylsäure, deren Metallsalzen und/oder deren Alkylestern
und/oder
b) Pfropfcopolymerisate von Alpha-Beta-ungesättigten Dicarbonsäuren, bevorzugt Maleinsäure, Fumarsäure, Itaconsäure, deren Säureanhydriden, Säureestern, Säureamiden und/oder Säureimiden, auf Polyolefine oder Polyolefin-Copolymere
sind.

6. Schlauchfolie nach Anspruch 1, **dadurch gekennzeichnet, daß** die Innenschicht aus einem Polyolefin und/oder modifiziertem Polyolefin mit einem Schmelzpunkt von 70 -130°C, einer Dichte von 0,86 - 0,98 g/cm³ und einem Schmelzindex von 0,2 -15 g/10 min besteht.

7. Schlauchfolie nach einem der vorangehenden Ansprüche, **dadurch gekennzeichnet, daß** die Kernschicht aus Homopolymeren von Ethylen oder Propylen und/oder Copolymeren linearer Alphaolefine mit 2 bis 8 C-Atomen besteht.

8. Schlauchfolie nach Anspruch 7, **dadurch gekennzeichnet, daß** die Polyolefine der Kernschicht vorzugsweise aus linearem Polyethylen niedriger Dichte, Polyethylen hoher Dichte, Polypropylen-Homopolymerisaten, Polypropylen-Block- und Polypropylen-Random-Copolymerisaten bestehen.

9. Schlauchfolie nach einem der vorangehenden Ansprüche, **dadurch gekennzeichnet, daß** die Zwischenschichten aus Polyolefinen und/oder modifizierten Polyolefinen bestehen.

10. Schlauchfolie nach Anspruch 9, **dadurch gekennzeichnet, daß** die Polyolefine der Zwischenschicht Homopolymere von Ethylen oder Propylen und/oder Copolymere linearer Alphaolefine mit 2 bis 8 C-Atomen sind.

11. Schlauchfolie nach Anspruch 9, **dadurch gekennzeichnet, daß** die modifizierten Polyolefine der Zwischenschichten
a) Copolymerisate von Ethylen oder Propylen und gegebenenfalls weiteren linearen Alpha-Olefinen mit 3 bis 8 C-Atomen
mit
Alpha-Beta-ungesättigten Carbonsäuren, bevorzugt Acrylsäure, Methacrylsäure, deren Metallsalzen und/oder deren Alkylestern
und/oder
b) Pfropfcopolymerisate von Alpha-Beta-ungesättigten Dicarbonsäuren, bevorzugt Maleinsäure, Fumarsäure, Itaconsäure, deren Säureanhydriden, Säureestern, Säureamiden und/oder Säureimiden, auf Polyolefine oder Polyolefin-Copolymere
sind.

12. Schlauchfolie nach Anspruch 1, **dadurch gekennzeichnet, daß** die Außenschicht aus einem Homopolyamid und/oder einem Copolyamid besteht, welche aus Monomeren hergestellt sind, die ausgewählt sind aus der Gruppe Caprolactam, Laurinlactam, Omegaaminoundecansäure, Adipinsäure, Azelainsäure, Sebazinsäure, Decandicarbonsäure, Dodecandicarbonsäure, Terephthalsäure, Isophthalsäure, Tetramethylendiamin, Pentamethylendiamin, Hexamethylendiamin, Octamethylendiamin und Xylylendiamin.

13. Schlauchfolie nach einem der vorangehenden Ansprüche, **dadurch gekennzeichnet, daß** sie coextrudiert und biaxial verstreckt ist.

14. Schlauchfolie nach einem der vorangehenden Ansprüche, **dadurch gekennzeichnet, daß** sie coextrudiert, biaxial verstreckt und anschließend thermofixiert ist.

15. Schlauchfolie nach einem der vorangehenden Ansprüche, **dadurch gekennzeichnet, daß** sie eine Wandstärke von 30 bis 100 µm, vorzugsweise 40 bis 90 µm aufweist.

16. Verwendung der Schlauchfolie nach einem der Ansprüche 1 bis 15 zur Verpackung und Umhüllung von Fleisch, Fleisch mit Knochen oder pastösen Lebensmitteln.

17. Beutel nach einem der Ansprüche 1 bis 15, **dadurch gekennzeichnet, daß** er aus einer Schlauchfolie nach einem der Ansprüche 1 bis 15 durch Verschweißen oder Siegeln der Innenschicht mit sich selbst hergestellt ist.

18. Verwendung eines nach Anspruch 17 hergestellten Beutels zur Verpackung und Umhüllung von Fleisch, Fleisch mit Knochen oder pastösen Lebensmitteln.

## Claims

1. An at least five-layered, biaxially oriented, shrinkable and sealable tubular film for packaging and wrapping meat, meat with bones, or pasty foodstuffs, **characterized in that** the tubular film is constituted of an inner layer of at least one heat-sealable polyolefin and/or modified polyolefin, a core layer of polyolefin and an outer layer of at least one polyamide, as well as two intermediate layers arranged between the inner layer and core layer and between the core layer and outer layer, respectively.

2. The tubular film according to claim 1, **characterized in that** the inner layer consists of homopolymers of ethylene or propylene and/or copolymers of linear α-olefins having 2 to 8 C atoms.

3. The tubular film according to claim 2, **characterized in that** the polyolefins of the inner layer preferably consist of linear low-density polyethylene, high-density polyethylene, polypropylene homopolymers, polypropylene block copolymers and polypropylene random copolymers.

4. The tubular film according to claim 3, **characterized in that** the inner layer consists of at least one polyethylene produced using a metallocene catalyst.

5. The tubular film according to claim 1, **characterized in that** the inner layer includes modified polyolefins, said modified polyolefins being
a) copolymers of ethylene or propylene and optionally further linear α-olefins having 3 to 8 C atoms
with
α,β-unsaturated carboxylic acids, preferably acrylic acid, methacrylic acid, metal salts thereof and/or alkyl esters thereof,
and/or
b) graft copolymers of α,β-unsaturated dicarboxylic acids, preferably maleic acid, fumaric acid, itaconic acid, and anhydrides, esters, amides or imides thereof on polyolefins or polyolefin copolymers.

6. The tubular film according to claim 1, **characterized in that** the inner layer consists of a polyolefin and/or modified polyolefin with a melting point of 70-130°C, a density of 0.86-0.98 g/cm³ and a melt index of 0.2-15 g/10 min.

7. The tubular film according to any of the preceding claims, **characterized in that** the core layer consists of homopolymers of ethylene or propylene and/or copolymers of linear α-olefins having 2 to 8 C atoms.

8. The tubular film according to claim 7, **characterized in that** the polyolefins of the core layer preferably consist of linear low-density polyethylene, high-density polyethylene, polypropylene homopolymers, polypropylene block copolymers and polypropylene random copolymers.

9. The tubular film according to any of the preceding claims, **characterized in that** the intermediate layers consist of polyolefins and/or modified polyolefins.

10. The tubular film according to claim 9, **characterized in that** the polyolefins of the intermediate layer are homopolymers of ethylene or propylene and/or copolymers of linear α-olefins having 2 to 8 C atoms.

11. The tubular film according to claim 9, **characterized in that** the modified polyolefins of the intermediate layers are
a) copolymers of ethylene or propylene and optionally further linear α-olefins having 3 to 8 C atoms
with
α,β-unsaturated carboxylic acids, preferably acrylic acid, methacrylic acid, metal salts thereof and/or alkyl esters thereof,
and/or
b) graft copolymers of α,β-unsaturated dicarboxylic acids, preferably maleic acid, fumaric acid, itaconic acid, and anhydrides, esters, amides or imides thereof on polyolefins or polyolefin copolymers.

12. The tubular film according to claim 1, **characterized in that** the outer layer consists of a homopolyamide and/or copolyamide which are produced from monomers selected from the group of caprolactam, laurinlactam, ω-aminoundecanoic acid, adipic acid, azelaic acid, sebacic acid, decanedicarboxylic acid, dodecanedicarboxylic acid, terephthalic acid, isophthalic acid, tetramethylenediamine, pentamethylenediamine, hexamethylenediamine, octamethylenediamine, and xylylenediamine.

13. The tubular film according to any of the preceding claims, **characterized in that** the tubular film has been subjected to coextrusion and biaxial stretching.

14. The tubular film according to any of the preceding claims, **characterized in that** the tubular film has been subjected to coextrusion, biaxial stretching and subsequent heat-setting.

15. The tubular film according to any of the preceding claims, **characterized in that** the tubular film has a wall thickness of from 30 to 100 µm, preferably from 40 to 90 µm.

16. Use of the tubular film according to any of claims 1 to 15 for packaging and wrapping meat, meat with bones, or pasty foodstuffs.

17. A bag according to any of claims 1 to 15, **characterized in that** said bag is produced from a tubular film according to any of claims 1 to 15 by welding or sealing the inner layer on itself.

18. Use of the bag produced according to claim 17 for packaging and wrapping meat, meat with bones, or pasty foodstuffs.

## Revendications

1. Film tubulaire à au moins cinq couches, étiré biaxialement, rétractable et scellable, pour l'emballage et l'enrobage de viande, de viande avec des os ou de produits alimentaires pâteux, **caractérisé en ce qu'**il est constitué d'une couche intérieure composée d'au moins une polyoléfine et/ou polyoléfine modifiée thermoscellable, d'une couche centrale composée de polyoléfine et d'une couche extérieure composée d'au moins un polyamide, ainsi que de deux couches intermédiaires disposées respectivement entre la couche intérieure et la couche centrale, ainsi qu'entre la couche centrale et la couche extérieure.

2. Film tubulaire selon la revendication 1, **caractérisé en ce que** la couche intérieure est constituée d'homopolymères d'éthylène ou de propylène et/ou de copolymères d'alpha-oléfines linéaires comportant de 2 à 8 atomes de C.

3. Film tubulaire selon la revendication 2, **caractérisé en ce que** les polyoléfines de la couche intérieure sont constituées de préférence de polyéthylène linéaire basse densité, de polyéthylène haute densité, d'homopolymères de polypropylène, de copolymères blocs de polypropylène et de copolymères aléatoires de polypropylène.

4. Film tubulaire selon la revendication 3, **caractérisé en ce que** la couche intérieure est constituée d'au moins un polyéthylène préparé en utilisant un catalyseur de métallocène.

5. Film tubulaire selon la revendication 1, **caractérisé en ce que** la couche intérieure contient des polyoléfines modifiées qui sont
a) des copolymères d'éthylène ou de propylène et le cas échéant d'autres alpha-oléfines linéaires comportant de 3 à 8 atomes de C
avec
des acides carboxyliques alpha-bêta-insaturés, de préférence l'acide acrylique, l'acide méthacrylique, leurs sels métalliques et/ou leurs esters alkyliques
et/ou
b) des copolymères greffés d'acides dicarboxyliques alpha-bêta-insaturés, de préférence d'acide maléique, d'acide fumarique et d'acide itaconique, et de leurs anhydrides d'acide, esters d'acide, amides d'acide et/ou imides d'acide sur des polyoléfines ou des copolymères de polyoléfines.

6. Film tubulaire selon la revendication 1, **caractérisé en ce que** la couche intérieure est constituée d'une polyoléfine et/ou d'une polyoléfine modifiée présentant un point de fusion de 70 à 130°C, une masse volumique de 0,86 à 0,98 g/cm³ et un indice de viscosité à l'état fondu de 0,2 à 15 g/10 min.

7. Film tubulaire selon l'une des revendications précédentes, **caractérisé en ce que** la couche centrale est constituée d'homopolymères d'éthylène ou de propylène et/ou de copolymères d'alpha-oléfines linéaires comportant de 2 à 8 atomes de C.

8. Film tubulaire selon la revendication 7, **caractérisé en ce que** les polyoléfines de la couche centrale sont constitués de préférence de polyéthylène linéaire basse densité, de polyéthylène haute densité, d'homopolymères de polypropylène, de copolymères blocs de polypropylène et de copolymères aléatoires de polypropylène.

9. Film tubulaire selon l'une des revendications précédentes, **caractérisé en ce que** les couches intermédiaires sont constituées de polyoléfines et/ou de polyoléfines modifiées.

10. Film tubulaire selon la revendication 9, **caractérisé en ce que** les polyoléfines de la couche intermédiaire sont des homopolymères d'éthylène ou de propylène et/ou des copolymères d'alpha-oléfines linéaires comportant de 2 à 8 atomes de C.

11. Film tubulaire selon la revendication 9, **caractérisé en ce que** les polyoléfines modifiées des couches intermédiaires sont
a) des copolymères d'éthylène ou de propylène et le cas échéant d'autres alphaoléfines linéaires comportant de 3 à 8 atomes de C
avec
des acides carboxyliques alpha-bêta-insaturés, de préférence l'acide acrylique, l'acide méthacrylique, leurs sels métalliques et/ou leurs esters alkyliques
et/ou
b) des copolymères greffés d'acides dicarboxyliques alpha-bêta-insaturés, de préférence d'acide maléique, d'acide fumarique et d'acide itaconique, et de leurs anhydrides d'acide, esters d'acide, amides d'acide et/ou imides d'acide sur des polyoléfines ou des copolymères de polyoléfines.

12. Film tubulaire selon la revendication 1, **caractérisé en ce que** la couche extérieure est constituée d'un homopolyamide et/ou d'un copolyamide, préparé à partir de monomères sélectionnés dans le groupe formé par les substances suivantes : caprolactame, laurolactame, acide oméga-amino-undécanique, acide adipique, acide azélaïque, acide sébacique, acide décanedicarboxylique, acide dodécanedicarboxylique, acide téréphtalique, acide isophtalique, tétraméthylènediamine, pentaméthylènediamine, hexaméthylènediamine, octaméthylènediamine et xylylènediamine.

13. Film tubulaire selon l'une des revendications précédentes, **caractérisé en ce qu'**il est coextrudé et étiré biaxialement.

14. Film tubulaire selon l'une des revendications précédentes, **caractérisé en ce qu'** il est coextrudé, étiré biaxialement et ensuite thermofixé.

15. Film tubulaire selon l'une des revendications précédentes, **caractérisé en ce qu'** il présente une épaisseur de paroi de 30 à 100 mm, et de préférence de 40 à 90 mm.

16. Utilisation du film tubulaire selon l'une des revendications 1 à 15 pour l'emballage et l'enrobage de viande, de viande avec des os ou de produits alimentaires pâteux.

17. Sachet selon l'une des revendications 1 à 15, **caractérisé en ce qu'**il est fabriqué à partir d'un film tubulaire selon l'une des revendications 1 à 15 par soudage ou scellage de la couche intérieure avec elle-même.

18. Utilisation d'un sachet fabriqué selon la revendication 17 pour l'emballage et l'enrobage de viande, de viande avec des os ou de produits alimentaires pâteux.
